# EUROPEAN PATENT SPECIFICATION

(11) **EP 4 212 923 B1**
(45) Date of publication and mention of the grant of the patent: **19.08.2026**
(21) Application number: 21882600.6
(22) Date of filing: 06.10.2021
(51) Int. Cl.: G02B 1/115, G02B 1/14, G02B 1/18, G02C 7/00, G02C 7/10, G02B 1/04

(54) **PLASTIC OPTICAL PRODUCT AND PLASTIC EYEGLASS LENS**
OPTISCHES KUNSTSTOFFPRODUKT UND KUNSTSTOFF-BRILLENGLAS
PRODUIT OPTIQUE EN PLASTIQUE ET VERRE DE LUNETTES EN PLASTIQUE

(30) Priority: 23.10.2020 JP 2020178342
(43) Date of publication of application: 19.07.2023
(73) Proprietor: Tokai Optical Co., Ltd., Okazaki-shi, Aichi 444-2192 (JP)
(72) Inventor: TAKAHASHI, Hirotoshi, Okazaki-shi, Aichi 444-2192 (JP)
(74) Representative: Prüfer & Partner mbB Patentanwälte · Rechtsanwälte
(86) International application number: PCT/JP2021/037054
(87) International publication number: WO 2022/085459

(56) References cited:
- WO-A1-2015/137282
- JP-A- 2002 205 353
- JP-A- 2004 077 989
- JP-A- 2004 077 989
- JP-A- 2010 231 174
- JP-A- 2012 128 135
- JP-A- 2012 128 135
- US-A1- 2017 003 520

## Description

### FIELD OF THE INVENTION

The present invention relates to a plastic optical product that is an optical product having a plastic base, and a plastic spectacle lens.

### BACKGROUND OF THE INVENTION

JP 2012 128135 A discloses a lens including an antireflection layer composed of (n+1)-layer low refractive index layers and n-layer (n is an integer of 2 or more) high refractive index layers. The low refractive index layers and the high refractive index layers are alternately laminated, at least one layer of the multiple high refractive index layers is a first type layer formed by vapor deposition using only a first vapor deposition source containing zirconium oxide as a major component, and the other high refractive index layers are second type layers formed by vapor deposition using only a second vapor deposition source containing titanium oxide as a major component. The multiple low refractive index layers are third type layers formed by vapor deposition using only a third vapor deposition source containing silicon oxide as a major component.

JP 2004 077989 A discloses an optical member provided with a plastic substrate and the antireflection film applied directly or indirectly onto the plastic substrate. In the optical member, the antireflection film is formed by laminating layers in the following order from the plastic substrate side: a first layer of SiO2(film thickness: 0. 05 to 0. 20λ), a second layer of Nb205(film thickness: 0. 02 to 0. 10λ), a third layer of SiO2(film thickness: 0. 35 to 0. 70λ), a fourth layer of Nb205(film thickness: 0. 04 to 0. 15λ), a fifth layer of SiO2(film thickness: 0. 04 to 0. 15λ), a sixth layer of Nb205(film thickness: 0. 20 to 0. 30λ), and a seventh layer of SiO2(0. 20 to 0. 30λ) (λ is a design wavelength).

US 2017/003520 A1 discloses a mirror-coated lens having a high transmittance and capable of suppressing a flare phenomenon and a ghost phenomenon. The mirror-coated lens includes a lens base material, a functional film containing a low refractive index layer, a high refractive index layer, and a metal layer on a front surface of the lens base material, and a functional film containing a low refractive index layer and a high refractive index layer on a back surface of the lens base material. The luminous reflectance on the front surface side is from 3 to 30%, the transmittance of the eyeglass lens is from 55 to 80%, and the luminous reflectance on the back surface side is from 0.1 to 9%.

A lens disclosed in Japanese Patent No. 5211289 has been known as a plastic lens, for a visible range, which is a plastic optical product.

In this lens, an optical multilayer film as an antireflection film is formed on a surface of a base. The optical multilayer film is formed by stacking seven or more layers in total such that low refractive index layers and high refractive index layers alternate. Also, the optical multilayer film is formed so as to exhibit a W-shaped spectral distribution of reflectance with a local maximum point of the center peak around a wavelength of 520 nm, from the viewpoint of assuring processing stability and generally acceptable outer appearance. In a case where a plastic lens having such an antireflection film formed therein is viewed from an incident side, pale-green reflected light is observed.

At the plastic lens, the reflected light is green.

Green is the brightest colour among colours perceived with a human eye. In other words, the wavelength of the light exhibit green colour is located near the local maximum point (wavelength of 555 nm) of a spectral luminous efficiency curve representing a ratio of an intensity with which a human eye perceives brightness for each wavelength of light, relative to the maximum sensitivity.

Accordingly, the reflected light from the plastic lens is conspicuous due to its green colour although the reflectance is very low and the green is pale-green. In other words, the luminous reflectance at the plastic lens is relatively high in a case where the relative luminous efficiency is taken into consideration.

Particularly, in a case where the plastic lens is used as a spectacle lens, reflected light from a wearer is relatively conspicuous to another person.

A main object of the present invention is to provide a plastic optical product and a plastic spectacle lens that allow reflected light to be more inconspicuous.

### SUMMARY OF THE INVENTION

The aforementioned object is achieved by the plastic optical product according to claim 1 and the plastic spectacle lens according to claim 5.

A main effect of the present invention is to provide a plastic optical product and a plastic spectacle lens that allow reflected light to be more inconspicuous.

### BRIEF DESCRIPTION OF THE DRAWINGS

FIG. 1 is a schematic cross-sectional view of a plastic optical product according to the present invention.
FIG. 2 shows a graph representing a spectral reflectance distribution in a visible range and an adjacent range, in Examples 1 to 4.
FIG. 3 shows a graph representing a spectral reflectance distribution in a visible range and an adjacent range, in Examples 5 to 7.
FIG. 4 shows a graph representing a spectral reflectance distribution in a visible range and an adjacent range, in Example 8 and Comparative examples 1 to 3.
FIG. 5 is a CIE chromaticity diagram in which chromaticity is plotted, for Examples 1 to 7.
FIG. 6 is a CIE chromaticity diagram in which chromaticity is plotted, for Example 8 and Comparative examples 1 to 3.

### DETAILED DESCRIPTION OF THE INVENTION

An exemplary embodiment of the present invention will be described below.

The present invention is not limited to the following embodiment.

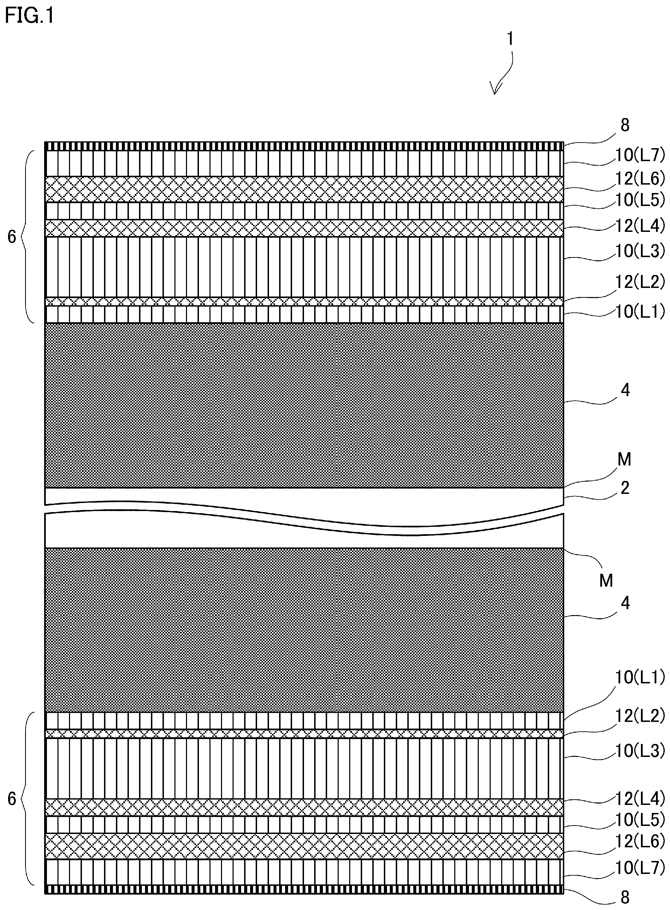

As shown in FIG. 1, a plastic optical product 1 according to the present invention has a plate-shaped base 2, optical multilayer films 6 formed on both surfaces (each film-formation surface M) of the base 2 via intermediate films 4, and a surface layer film 8 formed on each of the optical multilayer films 6 (side opposite to the base 2 side, air side).

The intermediate films 4 have the same structure, the optical multilayer films 6 have the same structure, and the surface layer films 8 have the same structure, as viewed from the base 2.

The base 2 may have a shape such as a block-like shape other than the plate-like shape. Each film-formation surface M may be a flat surface or a curved surface, and one film-formation surface M may have a shape different from that of the other film-formation surface M. At least one of the intermediate films 4 and the surface layer films 8 may be omitted. Furthermore, at least any one of the intermediate films 4, the optical multilayer films 6, and the surface layer films 8 may have a different structure for each film-formation surface M as viewed from the base 2. Moreover, at least any one of the intermediate film 4, the optical multilayer film 6, and the surface layer film 8 may be formed only on one surface of the base 2.

As a material of the base 2, plastic is used, and thermosetting resin is preferably used. Examples of the material of the base 2 include polyurethane resin, thiourethane resin, episulfide resin, polycarbonate resin, polyester resin, acrylic resin, polyether sulfone resin, poly(4-methylpentene-1) resin, diethylene glycol bis(allyl carbonate) resin, and a combination thereof. As a preferable material of the base 2 which has a high refractive index, for example, polyurethane resin obtained by addition-polymerization of a polyisocyanate compound with at least one of polythiol and sulfur-containing polyol may be used. Moreover, as a preferable material of the base 2 which has a high refractive index, episulfide resin obtained by addition-polymerization of an episulfide group with at least one of polythiol and sulfur-containing polyol may be used.

The base 2 preferably has an ultraviolet absorber added thereto.

Each intermediate film 4 is a film disposed between the base 2 and the optical multilayer film 6, and is, for example, a hard coating film. At least one of the intermediate films 4 may be a film other than a hard coating film, instead of the hard coating film, or a film other than a hard coating film may be additionally disposed on at least one of the base 2 side and the air side of the hard coating film.

The hard coating film is preferably formed by uniformly applying a hard coating solution on the surface of the base 2.

As a material of the hard coating film, an organosiloxane-based resin containing inorganic oxide particles may be preferably used. **In** this case, the hard coating solution is preferably prepared by mixing a solute including an organosiloxane-based resin and an inorganic oxide particle sol as main components, in water or an alcohol-based solvent. The organosiloxane-based resin is preferably obtained by hydrolyzing and condensing alkoxysilane. Specific examples of the organosiloxane-based resin include γ-glycidoxypropyltrimethoxysilane, γ-glycidoxypropyltriethoxysilane, methyl trimethoxysilane, ethyl silicate, and a combination thereof. The hydrolysis condensates of these alkoxysilanes are manufactured by hydrolyzing the alkoxysilane compounds or combinations thereof by an acidic aqueous solution such as hydrochloric acid.

Meanwhile, specific examples of a material of the inorganic oxide particles include a sol of each of zinc oxide, silicon dioxide (silica particulates), aluminium oxide, titanium oxide (titania particulates), zirconium oxide (zirconia particulates), tin oxide, beryllium oxide, antimony oxide, tungsten oxide, and cerium oxide, and mixed crystals of two or more of the sols. The diameter of the inorganic oxide particle is preferably not less than 1 nm and not greater than 100 nm, and more preferably not less than 1 nm and not greater than 50 nm from the viewpoint of assuring transparency of the hard coating film. A concentration of the inorganic oxide particles is preferably not less than 40 wt% and not greater than 60 wt% with respect to all the components in the hard coating film, from the viewpoint of assuring an appropriate level of at least one of hardness and toughness of the hard coating film. In addition, the hard coating solution may have, for example, at least one of an acetylacetone metal salt and an ethylenediaminetetraacetic acid metal salt added thereto as a curing catalyst. Furthermore, the hard coating solution may have a surfactant, a colourant, a solvent, or the like added thereto according to, for example, at least one of necessity for assuring adherence to the base 2 and necessity for facilitating formation.

A physical film thickness of the hard coating film is preferably not less than 0.5 µm and not greater than 4.0 µm, and more preferably not less than 1.0 µm and not greater than 3.0 µm. The lower limit in the film thickness range is determined since it is difficult to obtain a sufficient hardness if the film thickness is less than the lower limit. Meanwhile, the upper limit is determined since a possibility of causing a problem with physical properties such as generation of crack or fragility is significantly increased if the film thickness is greater than the upper limit.

Furthermore, as the intermediate film 4, a primer film may be additionally disposed between the hard coating film and the surface of the base 2 from the viewpoint of enhancing adherence of the hard coating film. Examples of a material of the primer film include polyurethane-based resin, acrylic resin, methacrylic resin, organosilicon-based resin, and a combination thereof. The primer film is preferably formed by uniformly applying a primer solution to the surface of the base 2. The primer solution is preferably a solution in which the above-described resin material and inorganic oxide particles are mixed in water or an alcohol-based solvent.

Each optical multilayer film 6 of the plastic optical product 1 is formed on the intermediate film 4. In a case where the intermediate film 4 is omitted, the optical multilayer film 6 is formed on the base 2 (each film-formation surface M).

Each optical multilayer film 6 is formed so as to exhibit an optical function, and is, for example, an antireflection film, a mirror film, a half mirror film, an ND filter, or a band pass filter. The optical multilayer films 6 may have different functions from each other.

Each optical multilayer film 6 is formed by, for example, vacuum deposition or sputtering. The methods for manufacturing each of the optical multilayer films 6 are preferably the same from the viewpoint of assuring ease of manufacturing. The methods for manufacturing each of the optical multilayer films 6 may be different from each other.

Each optical multilayer film 6 is formed by alternately stacking low refractive index layers formed of a low refractive index material that is a metal oxide, and high refractive index layers formed of a high refractive index material that is a metal oxide.

In the plastic optical product 1, each optical multilayer film 6 is structured to have seven layers as a whole. Furthermore, in each optical multilayer film 6, when the layer closest to the base 2 side (layer closest to the base 2) is a first layer L1, odd layers are low refractive index layers and even layers are high refractive index layers.

The low refractive index material is silicon oxide (SiO₂). Therefore, the odd layers of each optical multilayer film 6 are each an SiO₂ layer 10. The low refractive index material may be calcium fluoride (CaF₂), magnesium fluoride (MgF₂), or a mixture which contains two or more of them and SiO₂.

The high refractive index material is zirconium oxide (ZrO₂). Therefore, the even layers of each optical multilayer film 6 are each a ZrO₂ layer 12. The high refractive index material may be titanium oxide (TiO₂), tantalum oxide (Ta₂O₅), niobium oxide (Nb₂O₅), hafnium oxide (HfO₂), aluminium oxide (Al₂O₃), yttrium oxide (YO₂), or a mixture which contains two or more of them and ZrO₂.

In each optical multilayer film 6, one kind of the high refractive index material and one kind of the low refractive index material are used, so that the film designing is facilitated and cost for forming the films is low.

The various layers in each optical multilayer film 6 have the characteristics as claimed in claim 1 of the appended claims. In a case where the physical film thickness is less than 7 nm, the physical film thickness is excessively small, and it is difficult to assure accuracy of the film thickness. In a case where the physical film thickness is greater than 12 nm, it is difficult to assure inconspicuous reflected light.

Moreover, the ZrO₂ layer 12 as a fourth layer L4 has a physical film thickness of not less than 22 nm and not greater than 41 nm such that reflected light is made inconspicuous.

In a case where the physical film thickness is less than 20 nm, the physical film thickness is excessively small, and it is difficult to assure accuracy of the film thickness. In a case where the physical film thickness is greater than 50 nm, it is difficult to assure adherence to a portion (in particular, the intermediate film 4 as the hard coating film) in contact with the first layer L1.

In a case where, regarding each film-formation surface M on which the optical multilayer film 6 is directly or indirectly formed, luminous reflectance on one surface is not greater than 0.8% with a D65 light source and a viewing angle of 2°, the plastic optical product 1 in which unconventionally low luminous reflectance makes reflected light extremely inconspicuous, is provided.

The colour of the reflected light is white (achromatic colour) or bluish white, and particularly preferably white (achromatic colour) from the viewpoint of making the reflected light more inconspicuous. The colour of the reflected light can be qualitatively obtained as xy coordinates (x, y) in an xy colour system. The xy coordinates (x, y) are represented in a CIE chromaticity diagram.

Each surface layer film 8 is a film disposed closer to the air side than the optical multilayer film 6 is. The surface layer film 8 is, for example, an antifouling film (water repellent film, oil repellent film). In this case, an antifouling function is further imparted to the plastic optical product 1. At least one of the surface layer film 8 may be a film other than an antifouling film instead of the antifouling film, or a film such as a scratch-resistant film other than an antifouling film may be additionally disposed on at least one of the base 2 side and the air side of the antifouling film.

The antifouling film is obtained by, for example, polycondensation of an organosilicon compound. Through the polycondensation, the film can have an increased thickness and can be made dense in film coating, adherence to the optical multilayer film 6 and the surface hardness are enhanced, oil repellency in addition to water repellency is exhibited, and a coating film having excellent contamination wiping properties can be easily obtained.

The antifouling film is formed by, for example, publicly known vapor deposition or ion sputtering.

Before polycondensation, the organosilicon compound is preferably a compound having a silicon-containing functional group represented by -SiR_{y}X₃-_{y} (R represents a monovalent organic group, X represents a hydrolyzable group, and y represents an integer from 0 to 2). X represents, for example, an alkoxy group such as -OCH₃ and -OCH₂CH₃, an acyloxy group such as -OCOCH₃, a ketoxime group such as -ON=CRₐR_{b} (Rₐ and R_{b} each represent a monovalent organic group), a halogen group such as -Cl and -Br, or an amino group such as - NR_{c}Rₐ (R_{c} and R_{d} each represent a monovalent organic group).

As such an organosilicon compound, a fluorine-containing organosilicon compound is preferable. A fluorine-containing organosilicon compound comprehensively has excellent water/oil repellency, electrical insulation properties, demoldability, solvent resistance, lubricity, heat resistance, and defoaming properties. Particularly, a relatively large organosilicon compound having a perfluoroalkyl group or a perfluoropolyether group in a molecule and having a molecular weight of about 1000 to 50000 has excellent antifouling properties.

By using the above-described plastic optical product 1 as a plastic spectacle lens, a spectacle that makes reflected light inconspicuous and has excellent outer appearance is produced.

Next, Examples 5 to 7 of the present invention and Comparative examples 1 to 3, and examples 1 to 4 and 8 that do not belong to the present invention will be described with appropriate reference to the drawings. The present invention is not limited to the following examples. According to the interpretation of the present invention, the examples may be construed as the comparative examples or the comparative examples may be construed as the examples.

In the examples and the comparative examples, the bases 2 were each made of thermosetting resin for spectacles, and had a round shape having a standard size as a plastic spectacle lens.

The bases 2 were the same among the examples and the comparative examples, and were each a spherical lens having the lens center thickness of 1.9 mm and the power of S-0.00 and were made of thiourethane resin in which the refractive index was 1.60. The base 2 was not subjected to dyeing or the like, and the base 2 itself was colourless and transparent.

In the examples and the comparative examples, hard coating films were formed as the intermediate films 4 on both surfaces by applying a hard coating solution.

The hard coating solution was applied to the base 2 and heated, whereby the hard coating film was formed so as to be in contact with the base 2 as follows.

That is, 206 g of methanol, 300 g of methanol-dispersed titania-based sol (produced by JGC Catalysts and Chemicals Ltd., solid content of 30%), 60 g of γ-glycidoxypropyltrimethoxysilane, 30 g of γ-glycidoxypropylmethyldiethoxysilane, and 60 g of tetraethoxysilane were firstly dropped into a reaction vessel, and 0.01N (normality) of hydrochloric acid aqueous solution was dropped into the mixture, and the obtained mixture was stirred and hydrolyzed.

Subsequently, 0.5 g of a flow regulating agent and 1.0 g of a catalyst were added, and the obtained mixture was stirred at room temperature for three hours, thereby forming the hard coating solution.

The hard coating solution was applied to both surfaces of the base 2, and heated at 120°C for 1.5 hours and hardened, thereby forming the hard coating film having a film thickness of 2.5 µm.

Furthermore, in each of Examples 1 to 8 and Comparative examples 1 to 3, the optical multilayer films 6 and the surface layer films 8 were formed on the hard coating layers on both surfaces so as to form the same structure on both the surfaces.

The optical multilayer film 6 was an antireflection film and had seven layers in total, and was firstly formed on a convex surface side (front surface side) of the optical product, and was subsequently formed on a concave surface side (rear surface side) of the optical product, by vacuum deposition.

The SiO₂ layer 10 to be disposed at an odd layer in the optical multilayer film 6 was formed in a vacuum chamber by normal deposition by using SiO₂ available from Canon Optron, Inc. as a vapor deposition source.

The ZrO₂ layer 12 to be disposed at an even layer in the optical multilayer film 6 was formed in a vacuum chamber by ion assisted deposition by using ZrO₂ available from Canon Optron, Inc. as a vapor deposition source. Ion-assist gas in the ion-assist was mixed gas of oxygen (O₂) gas and argon (Ar) gas as rare gas, and output in the ion-assist was performed at an acceleration voltage of 500 V and an acceleration current of 300 mA . The refractive index of each ZrO₂ layer 12 was greater than the refractive index of SiO₂, and was able to be adjusted by a film forming rate, a film formation temperature (vacuum chamber temperature), the degree of vacuum, presence or absence of ion-assist, an acceleration voltage value in the ion-assist, a kind of gas, and the like.

The surface layer film 8 was an antifouling film (water/oil repellent film), and was formed on the optical multilayer film 6 at a thickness of 5.00 nm by using OF-SR available from Canon Optron, Inc.

In Examples 1 to 8 and Comparative examples 1 to 3, the optical multilayer film 6 (the first layer L1 to the seventh layer L7), and the surface layer film 8 were formed as indicated in the upper portion of each of the following Table 1 to Table 3. Each refractive index was a refractive index at a wavelength of 500 nm in each layer, and the refractive index had the same value (1.469) among all the SiO₂ layers 10 according to Examples 1 to 8 and Comparative examples 1 to 3, had the same value (2.106) among all the ZrO₂ layers 12 according thereto, and had the same value (1.350) among all the surface layer films 8 according thereto.

**[Table 1]**

| | Material | Refractive index at 500 nm | Physical film thickness [nm] | | | |
|---|---|---|---|---|---|---|
| | | | Example 1 | Example 2 | Example 3 | Example 4 |
| First layer L1 | SiO₂ | 1.469 | 35.00 | 20.50 | 24.00 | 30.50 |
| Second layer L2 | ZrO₂ | 2.106 | 10.00 | 8.80 | 11.00 | 12.00 |
| Third layer L3 | SiO₂ | 1.469 | 228.00 | 210.00 | 220.00 | 224.50 |
| Fourth layer L4 | ZrO₂ | 2.106 | 32.00 | 35.00 | 41.00 | 40.50 |
| Fifth layer L5 | SiO₂ | 1.469 | 27.00 | 18.00 | 15.50 | 16.50 |
| Sixth layer L6 | ZrO₂ | 2.106 | 51.00 | 60.00 | 59.00 | 58.00 |
| Seventh layer L7 | SiO₂ | 1.469 | 100.00 | 98.00 | 89.00 | 89.50 |
| Water/oil repellent agent | | 1.350 | 5.00 | 5.00 | 5.00 | 5.00 |
| Physical film thickness of fifth layer + physical film thickness of sixth layer [nm] | | | 78.00 | 78.00 | 74.50 | 74.50 |
| Chromaticity | | x | 0.24 | 0.23 | 0.24 | 0.24 |
| | | y | 0.26 | 0.28 | 0.27 | 0.25 |
| Luminous reflectance (%) | | D65 light source, viewing angle of 2° | 0.52 | 0.55 | 0.65 | 0.63 |

**[Table 2]**

| | Material | Refractive index at 500 nm | Physical film thickness [nm] | | |
|---|---|---|---|---|---|
| | | | Example 5 | Example 6 | Example 7 |
| First layer L1 | SiO₂ | 1.469 | 48.00 | 48.00 | 50.00 |
| Second layer L2 | ZrO₂ | 2.106 | 7.00 | 7.00 | 7.80 |
| Third layer L3 | SiO₂ | 1.469 | 258.50 | 260.00 | 238.50 |
| Fourth layer L4 | ZrO₂ | 2.106 | 22.00 | 22.50 | 30.50 |
| Fifth layer L5 | SiO₂ | 1.469 | 44.00 | 43.50 | 26.50 |
| Sixth layer L6 | ZrO₂ | 2.106 | 35.00 | 35.00 | 52.00 |
| Seventh layer L7 | SiO₂ | 1.469 | 107.50 | 107.50 | 99.00 |
| Water/oil repellent agent | | 1.350 | 5.00 | 5.00 | 5.00 |
| Physical film thickness of fifth layer + physical film thickness of sixth layer [nm] | | | 79.00 | 78.50 | 78.50 |
| Chromaticity | | x | 0.24 | 0.24 | 0.22 |
| | | y | 0.27 | 0.28 | 0.26 |
| Luminous reflectance (%) | | D65 light source, viewing angle of 2° | 0.65 | 0.70 | 0.53 |

**[Table 3]**

| | Material | Refractive index at 500 nm | Physical film thickness [nm] | | | |
|---|---|---|---|---|---|---|
| | | | Comparative example 1 | Comparative example 2 | Comparative example 3 | Example 8 |
| First layer L1 | SiO₂ | 1.469 | 20.00 | 31.50 | 55.00 | 24.50 |
| Second layer L2 | ZrO₂ | 2.106 | 6.00 | 14.00 | 6.20 | 10.50 |
| Third layer L3 | SiO₂ | 1.469 | 200.00 | 226.00 | 280.00 | 220.00 |
| Fourth layer L4 | ZrO₂ | 2.106 | 30.00 | 41.50 | 21.00 | 43.50 |
| Fifth layer L5 | SiO₂ | 1.469 | 11.50 | 15.00 | 49.50 | 14.50 |
| Sixth layer L6 | ZrO₂ | 2.106 | 81.50 | 65.50 | 31.00 | 58.00 |
| Seventh layer L7 | SiO₂ | 1.469 | 88.50 | 90.00 | 106.50 | 90.00 |
| Water/oil repellent agent | | 1.350 | 5.00 | 5.00 | 5.00 | 5.00 |
| Physical film thickness of fifth layer + physical film thickness of sixth layer [nm] | | | 93.00 | 80.50 | 80.50 | 72.50 |
| Chromaticity | | x | 0.25 | 0.30 | 0.29 | 0.24 |
| | | y | 0.38 | 0.26 | 0.33 | 0.30 |
| Luminous reflectance (%) | | D65 light source, viewing angle of 2° | 0.55 | 0.63 | 0.91 | 0.83 |

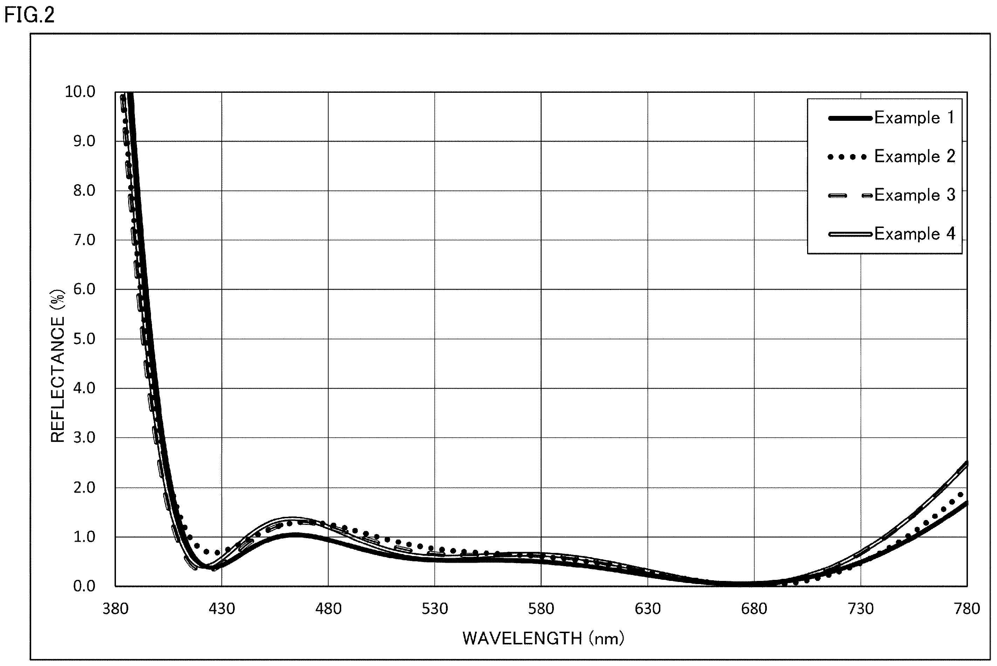

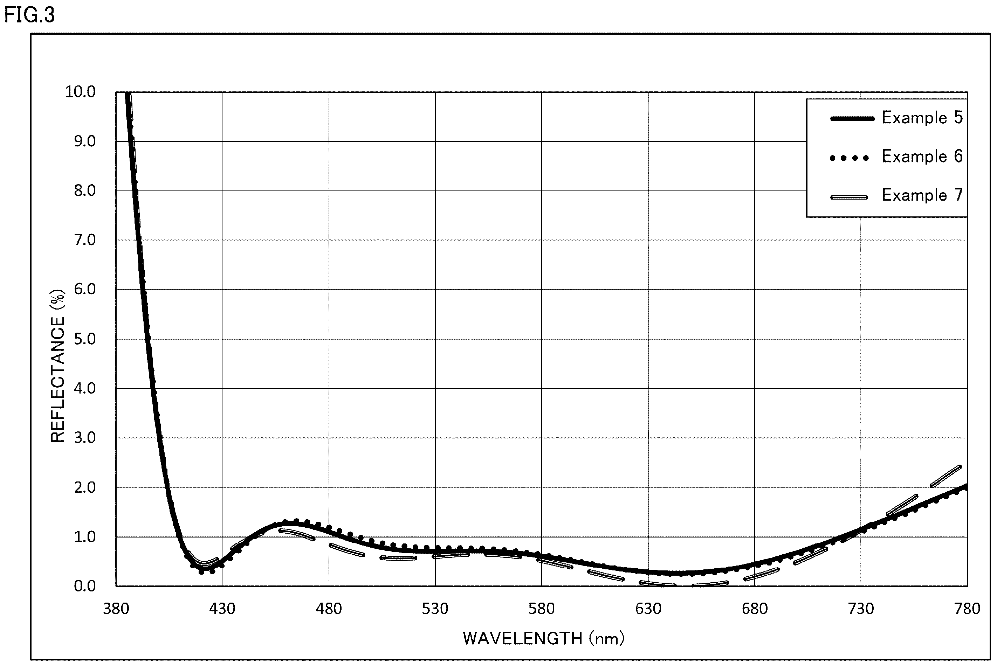

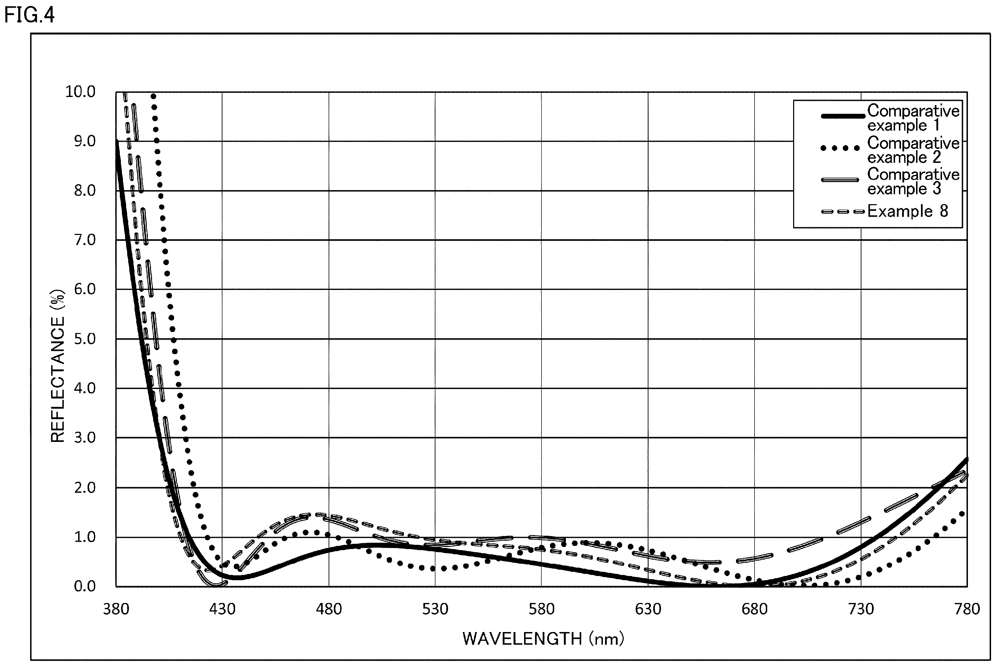

For Examples 1 to 8 and Comparative examples 1 to 3, in a visible range (range of wavelengths of not less than 400 nm and not greater than 780 nm in the description herein) and an adjacent range (range of wavelengths of not less than 380 nm and not greater than 400 nm in the description herein), a spectral reflectance distribution (FIG. 2 to FIG. 4) and luminous reflectance (D65 light source, viewing angle of 2°) at the convex surface side were measured (the lower side of the lower portion in each of Table 1 to Table 3).

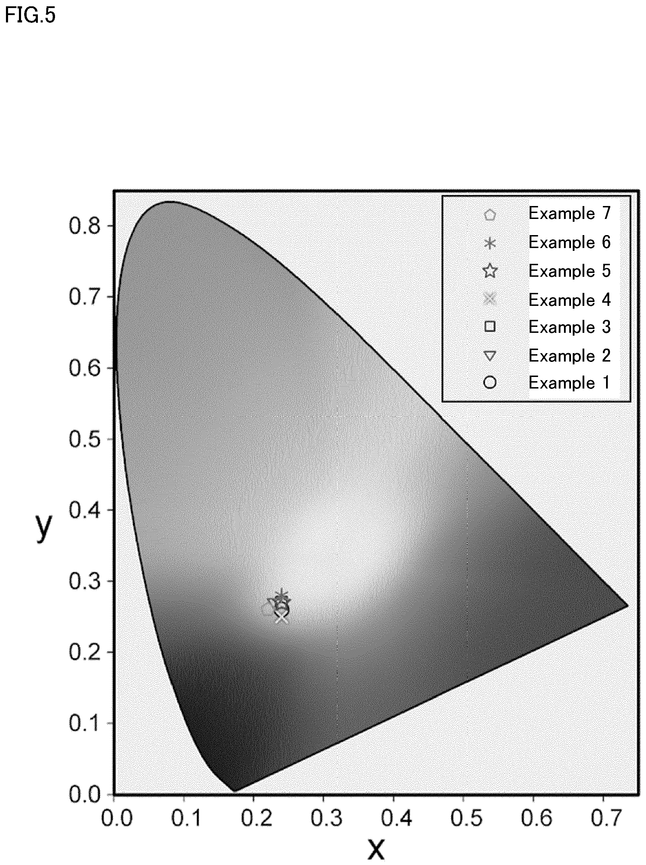

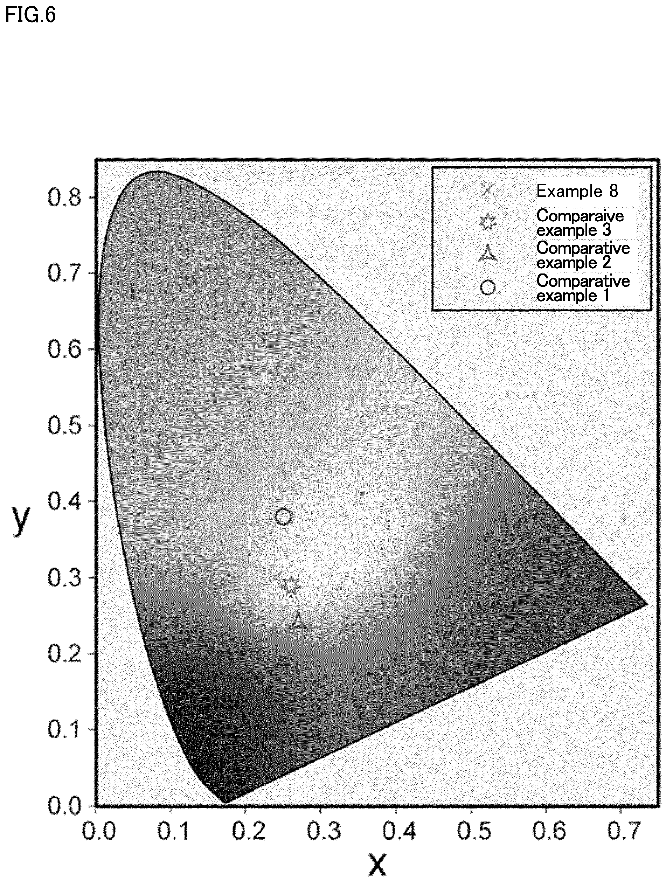

For Examples 1 to 8 and Comparative examples 1 to 3, chromaticity, namely, x and y (D65 light source, viewing angle of 2°) in an xy colour system was measured (the upper side of the lower portion in each of Table 1 to Table 3). FIG. 5 and FIG. 6 are each a CIE chromaticity diagram in which (x, y) in Examples 1 to 8 and Comparative examples 1 to 3 are plotted.

In comparative example 1, the physical film thickness (L3) of the third layer L3 was 200.00 nm, and was less than 210 nm, the physical film thickness (L2) of the second layer L2 was 6.00 nm, and was less than 7 nm, and (L5+L6) of the physical film thickness of the fifth layer L5 and the physical film thickness of the sixth layer L6 was 93.00 nm, and was greater than 80 nm. In Comparative example 1, the luminous reflectance was 0.55% and was not greater than 0.8%, and was thus very good. However, in Comparative example 1, the chromaticity (x, y)=(0.25, 0.38) was satisfied, and reflected light generated by slight reflection had a green colour and was conspicuous in chromaticity. The spectral reflectance distribution in Comparative example 1 formed a W shape having the center maximum value at about 500 nm.

In Comparative example 2, L3=226.00 nm was satisfied and L3 was in a range of not less than 210 nm and not greater than 270 nm, L2=14.00 nm was satisfied and L2 was greater than 12 nm, the physical film thickness (L4) of the fourth layer L4 was 41.50 nm and was greater than 41 nm, and L5+L6=80.50 nm was satisfied and L5+L6 was greater than 80 nm. In Comparative example 2, the luminous reflectance was 0.63% and was not greater than 0.8%, and was thus very good. However, in Comparative example 2, the chromaticity (x, y)=(0.30, 0.26) was satisfied, and reflected light generated by slight reflection had a pink colour and was conspicuous in chromaticity. In Comparative example 2, the spectral reflectance distribution formed a WW shape having two local maximum values of about 1.0% (at about 475nm, about 610nm).

In Comparative example 3, L3=280.00 nm was satisfied and L3 was greater than 270 nm, L2=6.20 nm was satisfied and L2 was less than 7 nm, L4=21.00 nm was satisfied and L4 was less than 22 nm, and L5+L6=80.50 nm was satisfied and L5+L6 was greater than 80 nm. In Comparative example 3, the chromaticity (x, y)=(0.29, 0.33) was satisfied, and reflected light generated by slight reflection had a white colour (achromatic colour) and was inconspicuous in chromaticity. However, in Comparative example 3, the luminous reflectance was 0.91%, was greater than 0.8% by an amount greater than 0.1 points, and did not reach an excellent level. In Comparative example 3, the spectral reflectance distribution formed a WW shape having the local maximum values at about 475 nm and about 580 nm. In Comparative example 3, the physical film thickness (L1) of the first layer L1 was 55.00 nm and was greater than 50 nm, and adherence of the optical multilayer film 6 to the hard coating film was not sufficiently assured.

In Example 8, L3=220.00 nm was satisfied and L3 was in a range of not less than 210 nm and not greater than 270 nm, L2=10.50 nm was satisfied and L2 was in a range of not less than 7 nm and not greater than 12 nm, L4=43.50 nm was satisfied and L4 was slightly greater than 41 nm, and L5+L6=72.50 nm was satisfied and L5+L6 was less than 74 nm. In Example 8, the chromaticity (x, y)=(0.24, 0.30) was satisfied, and the reflected light generated by slight reflection had a white colour (achromatic colour) and was inconspicuous in chromaticity. In Example 8, although the luminous reflectance was 0.83%, was slightly greater than 0.8% (by 0.03 points), and was slightly inferior to those of Examples 1 to 7, excellent luminous reflectance was assured. In Example 8, the spectral reflectance distribution formed a W shape having the local maximum value at about 475 nm.

Meanwhile, in each of Examples 1 to 7, L3 was in a range of not less than 210 nm and not greater than 270 nm, L2 was in a range of not less than 7 nm and not greater than 12 nm, and L4 was in a range of not less than 22 nm and not greater than 41 nm. L5+L6 was in a range of not less than 74 nm and not greater than 80 nm. Therefore, in Examples 1 to 7, the optical multilayer film 6 had antireflection performance, and each luminous reflectance was not greater than 0.8% and was thus at an extremely excellent level. Each chromaticity of reflected light generated by slight reflection indicated a white colour (achromatic colour) or a bluish white colour, and the reflected light was viewed by a person so as to be colourless and transparent or so as to have a very light blue colour, and was inconspicuous. Each reflectance distribution formed a W shape having the local maximum value in a range of not less than 450 nm and not greater than 475 nm.

Furthermore, in each of Examples 1 to 7, L1 was in a range of not less than 20 nm and not greater than 50 nm. Therefore, the first layer L1 was easily formed, and adherence to the hard coating film was sufficiently assured.

Examples 1 to 8 are each a plastic spectacle lens in which the optical multilayer films 6 are formed, via the intermediate films 4 that are the hard coating films, on both surfaces of the base 2 made of plastic. In each optical multilayer film 6, the SiO₂ layers 10 made of SiO₂ and the ZrO₂ layers 12 made of ZrO₂ alternate such that the total number of the SiO₂ layers 10 and the ZrO₂ layers 12 is seven and the first layer L1 closest to the base 2 is the SiO₂ layer 10. In Examples 1 to 8, the physical film thickness of the SiO₂ layer 10 disposed at the third layer L3 counting from the base 2 is not less than 210 nm and not greater than 270 nm, and the physical film thickness of the ZrO₂ layer 12 disposed at the second layer counting from the base 2 is not less than 7 nm and not greater than 12 nm. Therefore, reflected light becomes inconspicuous.

In Examples 1 to 7, the physical film thickness of the ZrO₂ layer 12 disposed at the fourth layer L4 counting from the base 2 is not less than 22 nm and not greater than 41 nm. Therefore, reflected light becomes more inconspicuous.

In Examples 1 to 8, the physical film thickness of the SiO₂ layer 10 as the first layer L1 closest to the base 2 is not less than 20 nm and not greater than 50 nm. Therefore, the optical multilayer film 6 is more easily formed, and assuredly has excellent adherence to the intermediate film 4.

In addition, in Examples 1 to 7, the sum of the physical film thickness of the SiO₂ layer 10 disposed at the fifth layer L5 counting from the base 2 and the physical film thickness of the ZrO₂ layer 12 disposed at the sixth layer L6 counting from the base 2 is not less than 74 nm and not greater than 80 nm. Therefore, reflected light becomes more inconspicuous.

The intermediate film 4 is a hard coating film. Therefore, the hardness of the plastic optical product 1 is preferable, and, consequently, durability thereof is preferable.

In Examples 1 to 7, the luminous reflectance at the convex surface at which the optical multilayer film 6 is formed, is not greater than 0.8%. Therefore, the luminous reflectance is extremely low, and the reflected light further becomes more inconspicuous.

Furthermore, in Examples 1 to 8, reflected light at the surface at which the optical multilayer film 6 is formed has a white colour or a bluish white colour. Therefore, the reflected light further becomes more inconspicuous.

## Claims

1. A plastic optical product (1) comprising
an optical multilayer film (6) formed directly or via an intermediate film (4) on at least one surface of a plastic base, wherein
in the optical multilayer film (6), SiO₂ layers (10) made of SiO₂ and ZrO₂ layers (12) made of ZrO₂ alternate such that a total number of the SiO₂ layers (10) and the ZrO₂ layers (12) is seven and a layer closest to the base (2) is the SiO₂ layer (10),
the SiO₂ layer (10) disposed at a third layer (L3) counting from the base (2) has a physical film thickness of not less than 238.5 nm and not greater than 270 nm,
the ZrO₂ layer (12) disposed at a second layer (L2) counting from the base (2) has a physical film thickness of not less than 7 nm and not greater than7.8 nm,
the SiO₂ layer (10) that is a layer closest to the base (2) has a physical film thickness of not less than 48 nm and not greater than 50 nm.
a sum of a physical film thickness of the SiO₂ layer (10) disposed at a fifth layer (L5) counting from the base (2) and a physical film thickness of the ZrO₂ layer (12) disposed at a sixth layer (L6) counting from the base (2) is not less than 78.5 nm and not greater than 79 nm, and
reflected light at a surface at which the optical multilayer film (6) is formed has a white colour or a bluish white colour,
wherein, for the reflected light, x in an xy color system is not less than 0.22 and not greater than 0.24, and y in an xy colour system is not less than 0.26 and not greater than 0.28.

2. The plastic optical product according to claim 1, wherein the ZrO₂ layer (12) disposed at a fourth layer (L4) counting from the base (2) has a physical film thickness of not less than 22 nm and not greater than 41 nm.

3. The plastic optical product (1) according to claim 1 or 2, wherein the intermediate film (4) is a hard coating film.

4. The plastic optical product (1) according to any one of claim 1 to claim 3, wherein luminous reflectance at a surface at which the optical multilayer film (6) is formed is not greater than 0.8%.

5. A plastic spectacle lens comprising the plastic optical product (1) according to any one of claim 1 to claim 4.

## Patentansprüche

1. Optisches Kunststoffprodukt (1), aufweisend
einen optischen Mehrschichtfilm (6), der direkt oder über einen Zwischenfilm (4) auf mindestens einer Oberfläche einer Kunststoffbasis gebildet ist, wobei
in dem optischen Mehrschichtfilm (6) SiO₂ -Schichten (10), die aus SiO₂ hergestellt sind, und ZrO₂ -Schichten (12), die aus ZrO₂ hergestellt sind, sich abwechseln, so dass eine Gesamtzahl der SiO₂ -Schichten (10) und der ZrO₂ -Schichten (12) sieben beträgt und eine Schicht, die der Basis (2) am nächsten liegt, die SiO₂ -Schicht (10) ist,
die SiO₂ -Schicht (10), die an einer dritten Schicht (L3) angeordnet ist, gezählt von der Basis (2), eine physikalische Filmdicke von nicht weniger als 238,5 nm und nicht mehr als 270 nm aufweist,
die ZrO₂ -Schicht (12), die an einer zweiten Schicht (L2) angeordnet ist, gezählt von der Basis (2), eine physikalische Filmdicke von nicht weniger als 7 nm und nicht mehr als 7,8 nm aufweist,
die SiO₂ -Schicht (10), die eine Schicht ist, die der Basis (2) am nächsten liegt, eine physikalische Filmdicke von nicht weniger als 48 nm und nicht mehr als 50 nm aufweist,
eine Summe einer physikalischen Filmdicke der SiO₂ -Schicht (10), die an einer fünften Schicht (L5) angeordnet ist, gezählt von der Basis (2), und einer physikalischen Filmdicke der ZrO₂ - Schicht (12), die an einer sechsten Schicht (L6) angeordnet ist, gezählt von der Basis (2), nicht weniger als 78,5 nm und nicht mehr als 79 nm beträgt, und dass
reflektiertes Licht an einer Oberfläche, an der der optische Mehrschichtfilm (6) gebildet ist, eine weiße Farbe oder eine bläulich weiße Farbe aufweist,
wobei für das reflektierte Licht x in einem xy-Farbsystem nicht weniger als 0,22 und nicht mehr als 0,24 beträgt und y in einem xy-Farbsystem nicht weniger als 0,26 und nicht mehr als 0,28 beträgt.

2. Optisches Kunststoffprodukt gemäß Anspruch 1, wobei die ZrO₂ -Schicht (12), die an einer vierten Schicht (L4) angeordnet ist, gezählt von der Basis (2), eine physikalische Filmdicke von nicht weniger als 22 nm und nicht mehr als 41 nm aufweist.

3. Optisches Kunststoffprodukt (1) gemäß Anspruch 1 oder 2, wobei der Zwischenfilm (4) ein Hartbeschichtungsfilm ist.

4. Optisches Kunststoffprodukt (1) gemäß einem der Ansprüche 1 bis 3, wobei der Lichtreflexionsgrad an einer Oberfläche, an der der optische Mehrschichtfilm (6) gebildet ist, nicht mehr als 0,8 % beträgt.

5. Kunststoffbrillenglas, aufweisend das optische Kunststoffprodukt (1) gemäß einem der Ansprüche 1 bis 4.

## Revendications

1. Produit optique en plastique (1) comprenant
un film multicouche optique (6) formé directement ou via un film intermédiaire (4) sur au moins une surface d'une base en plastique, où
dans le film multicouche optique (6), des couches de SiO₂ (10) faites de SiO₂ et des couches de ZrO₂ (12) faites de ZrO₂ alternent de telle sorte qu'un nombre total des couches de SiO₂ (10) et des couches de ZrO₂ (12) est de sept et une couche la plus proche de la base (2) est la couche de SiO₂ (10),
la couche de SiO₂ (10) disposée au niveau d'une troisième couche (L3) en comptant à partir de la base (2) a une épaisseur de film physique non inférieure à 238,5 nm et non supérieure à 270 nm,
la couche de ZrO₂ (12) disposée au niveau d'une deuxième couche (L2) en comptant à partir de la base (2) a une épaisseur de film physique non inférieure à 7 nm et non supérieure à 7,8 nm,
la couche de SiO₂ (10) qui est une couche la plus proche de la base (2) a une épaisseur de film physique non inférieure à 48 nm et non supérieure à 50 nm,
une somme d'une épaisseur de film physique de la couche de SiO₂ (10) disposée au niveau d'une cinquième couche (L5) en comptant à partir de la base (2) et d'une épaisseur de film physique de la couche de ZrO₂ (12) disposée au niveau d'une sixième couche (L6) en comptant à partir de la base (2) est non inférieure à 78,5 nm et non supérieure à 79 nm, et
une lumière réfléchie au niveau d'une surface au niveau de laquelle le film multicouche optique (6) est formé a une couleur blanche ou une couleur blanche bleutée,
où, pour la lumière réfléchie, x dans un système de couleur xy est non inférieur à 0,22 et non supérieur à 0,24, et y dans un système de couleur xy est non inférieur à 0,26 et non supérieur à 0,28.

2. Produit optique en plastique selon la revendication 1, où la couche de ZrO₂ (12) disposée au niveau d'une quatrième couche (L4) en comptant à partir de la base (2) a une épaisseur de film physique non inférieure à 22 nm et non supérieure à 41 nm.

3. Produit optique en plastique (1) selon la revendication 1 ou 2, où le film intermédiaire (4) est un film de revêtement dur.

4. Produit optique en plastique (1) selon l'une quelconque de la revendication 1 à la revendication 3, où la réflectance lumineuse au niveau d'une surface au niveau de laquelle le film multicouche optique (6) est formé n'est pas supérieure à 0,8 %.

5. Verre de lunettes en plastique comprenant le produit optique en plastique (1) selon l'une quelconque de la revendication 1 à la revendication 4.
